# FASCICULE DE BREVET EUROPEEN

(11) **EP 1 905 333 B1**
(45) Date de publication et mention de la délivrance du brevet: **12.10.2011**
(21) Numéro de dépôt: 07117418.9
(22) Date de dépôt: 27.09.2007
(51) Int. Cl.: A47J 43/25

(54) **Appareil manuel à racler le fromage**
Handgerät zum Reiben von Käse
Manual cheese-scraping device

(30) Priorité: 27.09.2006 CH 15422006
(43) Date de publication de la demande: 02.04.2008
(73) Titulaire: Metafil Lagirolle SA, 2718 Lajoux (CH)
(72) Inventeur: Rognon, Thierry, 68210, Chavannes sur l'étang (FR)
(74) Mandataire: Ganguillet, Cyril

(56) Documents cités:
- EP-A- 1 340 444
- EP-A- 1 554 962
- CH-A5- 635 995
- FR-A- 2 854 880

## Description

La présente invention concerne un appareil manuel à racler le fromage, plus particulièrement à racler des fromages de forme globalement cylindrique et dont la pâte est mi-dure, et plus particulièrement encore des fromages dont les propriétés de dureté et de consistance permettent, par l'effet engendré par le passage du couteau, un écrasement et une déstructuration de la zone de surface du fromage devant le couteau, puis le prélèvement par le couteau d'une couche de fromage et sa réorganisation aléatoire, mais cependant globalement constante, en une rosette.

### Etat de la technique

L'appareil à débiter circulairement un fromage de forme cylindrique à pâte mi-dure par raclage, à savoir par écrasement localisé puis détachement et accumulation d'une couche de pâte déstructurée, au moyen d'un couteau tournant est connu du brevet européen 1340444 A1, sur lequel le préambule de la revendication 1 se base.

Cet état de la technique, exhaustivement illustré par ce document de brevet, doit être complété par le fait qu'il est aussi connu dans le commerce d'associer l'appareil à une cloche rigide, généralement en matière synthétique transparente. En effet, il est fréquent que l'utilisateur entame le fromage et en consomme une partie sous forme de rosettes, mais ne termine pas le fromage entier d'une seule fois. La cloche couvrant le fromage, toujours en position sur le plateau de l'appareil, permet de protéger le fromage entamé jusqu'au prochain repas. Cependant, la cloche est bien sûr dimensionnée pour pouvoir couvrir en tout état de cause un fromage entier, et non pas uniquement la fraction aléatoire qui peut en rester après la première phase de consommation.

On relève aussi que, dans sa version la plus traditionnelle, le plateau de l'appareil se présente sous forme d'un disque en bois de bonne épaisseur. La version en matière synthétique du plateau de l'appareil selon l'état de la technique est tout à fait comparable au point de vue de sa compacité et de la place qu'il occupe.

Lorsque, comme on l'a évoqué plus haut, il s'agit de ranger dans une armoire frigorifique un fromage entamé, on commence par retirer le couteau tournant de l'appareil pour le laver. Ensuite, sans retirer la tige vertical sur laquelle le fromage est empalé, on place la cloche de manière que le trou rond qu'elle comporte au centre de son sommet s'engage en coulissement sur la tige et on laisse ensuite descendre la cloche le long de la tige jusqu'à ce que la base de sa jupe repose sur le plateau dont le diamètre est légèrement supérieur à celui de la jupe de la cloche. On cherche ensuite une place dans l'armoire frigorifique, où elle est rare. Bref, l'encombrement lié à l'appareil en configuration de rangement provisoire est problématique. L'effet protecteur de la cloche empêche que de la poussière, ou plus probablement des fragments d'autres aliments, tombent sur le fromage, mais compte tenu du nécessaire volume d'air enfermé dans la cloche, la protection du fromage contre le dessèchement rapide de sa surface supérieure est une illusion.

On doit aussi mentionner qu'après un cycle d'utilisation complet, c'est-à-dire une fois le fromage entièrement consommé, l'appareil lavé et séché se présente en quatre parties désolidarisées les unes des autres, soit le plateau, la tige, le couteau tournant et la cloche. Afin de ne pas égarer ces diverses parties, l'immense majorité des consommateurs les rangent alors dans le carton malgré tout assez volumineux dans lequel se trouvait l'appareil lorsqu'ils l'ont acheté, ou reçu.

Enfin, pour que l'appareil selon l'état de la technique fonctionne au mieux, il est nécessaire que, lors de son engagement sur la tige par empalement, l'utilisateur prenne soin de bien centrer le fromage. Cela n'a évidemment rien de périlleux ni d'insurmontable, mais chaque utilisateur fait tôt ou tard l'expérience que ce centrage est moins facile à réaliser qu'on ne le pense.

### But de l'invention

Le but de la présente invention s'exprime dans quatre directions distinctes qu'elle a le mérite de rendre compatibles, à savoir premièrement de proposer une configuration permettant de réduire l'encombrement lié à l'entreposage provisoire du fromage entamé, deuxièmement de proposer une configuration permettant de réduire l'encombrement lié à l'entreposage prolongé de l'appareil après un cycle complet d'utilisation, troisièmement de proposer une configuration qui facilite l'opération de centrage et d'engagement du fromage sur la tige, et quatrièmement de proposer une configuration qui apporte un gain d'hygiène et de confort de manipulation pour le consommateur.

Pour ce qui concerne la vocation première de l'appareil, c'est-à-dire sa capacité à racler le fromage en rosettes harmonieusement formées, la présente invention ne prétend rien apporter ni de nouveau, ni de meilleur, et tel n'est donc pas son but. Néanmoins, les avantages nouveaux apportés par la réalisation du but de l'invention n'hypothèquent en rien non plus la capacité connue de vérifier aussi et pleinement la vocation première de l'appareil.

A cette fin, l'appareil à racler le fromage selon l'invention comporte, outre une tige et un couteau tournant muni d'une poignée, deux éléments distincts coopérant l'un avec l'autre, à savoir une base et un socle rond qui remplacent le plateau selon l'art antérieur, le socle étant conformé pour coopérer avec un couvercle, pouvant comporter, selon une variante, une coiffe souple.

L'appareil selon l'invention se distingue aussi par le fait que le socle peut comporter en son centre un canal guide cylindrique inscrit dans un téton et par le fait que le diamètre du canal guide cylindrique est choisi pour être en rapport avec le diamètre de la tige.

L'appareil selon l'invention se distingue aussi par le fait que la tige peut être terminée par une douille conformée pour coopérer avec une couronne centrée disposée sur la face inférieure du socle.

L'appareil selon l'invention se distingue aussi par le fait que le couvercle peut comporter une bague rigide sur laquelle est fixée une coiffe, souple ou rigide, et par le fait que la bague peut comporter des moyens destinés à coopérer avec des moyens correspondant du socle de manière à permettre la fixation amovible du couvercle sur le socle.

L'appareil selon l'invention se distingue aussi par le fait que la base peut comporter, sur sa partie interne des languettes de retenue munies d'un rebord en griffe orienté vers le centre de la base, l'ensemble des dites languettes étant conformé de manière à retenir par effet ressort le socle portant le couvercle à l'intérieur de la base lorsqu'il y est introduit en compression de la coiffe souple.

### Description de formes d'exécution de l'invention

On décrit ci-dessous, à titre d'exemples non limitatifs, deux formes d'exécution de l'appareil selon l'invention en se référant au dessin dans lequel :
La figure 1 est une vue d'ensemble en perspective d'un premier mode d'éxecution de l'appareil selon l'invention.
La figure 2 est une vue en perspective de dessus de la base de l'appareil représenté à la figure 1.
La figure 3 est une vue de détail de la base représentée à la figure 1.
Les figures 4 et 5 sont des vues en perspective depuis dessus et respectivement depuis dessous du socle de l'appareil de la figure 1.
La figure 6 est une vue en perspective de la tige de l'appareil représenté à la figure 1.
La figure 7 est une vue en coupe de la tige de de la figure 6.
La figure 8 est une vue en perspective de la bague rigide de l'appareil de la figure 1.
La figure 9A est une vue en perspective depuis dessus du couvercle de l'appareil de la figure 1.
La figure 9B est une vue en coupe du couvercle de la figure 9A.
La figure 10 est une vue en coupe de l'appareil de la figure 1.
La figure 11 est une vue en perspective depuis dessous de la base de l'appareil de la figure 1.
La figure 12 est une vue de détail en perspective de dessous d'un pied de la base de l'appareil de la figure 1
Les figures 13 et 14 sont respectivement une vue d'ensemble en perspective et une vue en coupe d'un second mode d'éxecution de l'appareil selon l'invention.
Les figures 15 et 16 sont respectiement une vue en perspective de dessus et une vue en plan depuis dessus de la base de l'appareil de la figure 13.
Les figures 17, 18 et 19 sont respectivement vue en perspective de dessus, une vue de côté et une vue en plan depuis dessus du socle de l'appareil de la figure 13.
La figure 20 est une coupe de la bague rigide de l'appareil de la figure 13.
La figure 21 est une vue en coupe du couvercle de l'appareil de la figure 13.

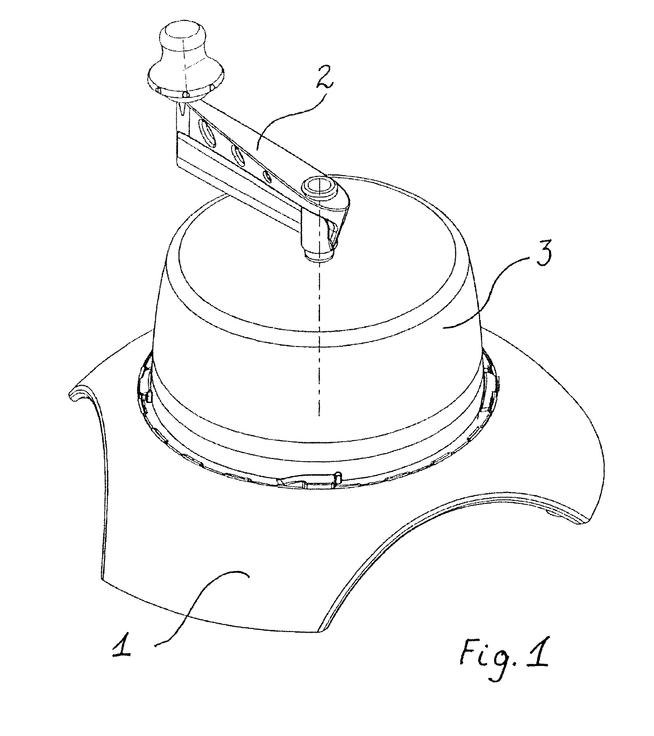

Sur la figure 1, les différentes pièces ou parties de l'appareil selon l'invention sont représentées mises en coopération les unes avec les autres. Certaines pièces essentielles sont masquées dans cette vue, mais on peut identifier une base 1, un couteau tournant 2 et un couvercle 3.

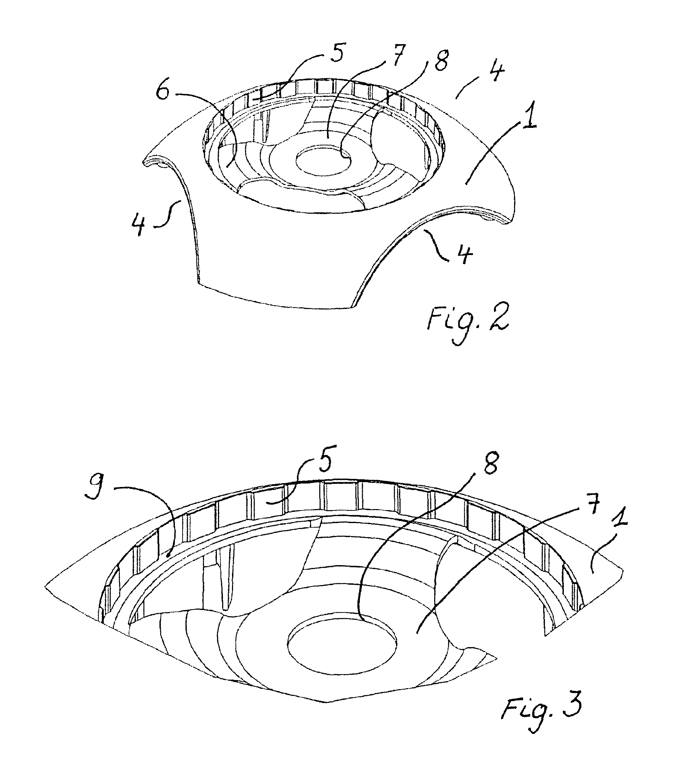

Sur la figure 2, on peut observer que la base 1 de l'appareil a, très grossièrement, la forme d'un dôme, rappelant celle du chapeau détaché d'un oeuf à la coque. Cette forme de départ est modifiée par la réalisation de trois découpes 4 qui donnent à la base 1 la forme et la fonctionnalité d'un trépied assurant une assise indéfectible à la base lorsqu'elle est posée sur la surface plate d'une table ou d'un plan de travail. La partie centrale de la base 1 est évidée pour offrir en creux un court tronc de cylindre, dont on peut noter que la paroi intérieure est garnie de dents formant un léger crantage 5. A la base du cylindre creux cranté se trouve un renfort 6 à trois bras dont le centre est constitué d'un disque 7 au milieu duquel est découpé un trou rond 8.

Sur la figure 3, on voit mieux le tronc de cylindre creux et cranté 5 de la base 1. On reconnaît aussi le renfort 6 à trois bras avec en son centre le disque 7 au milieu duquel se trouve le trou rond 8. On observe aussi que le cylindre creux et cranté 5 est muni à sa lisière inférieure d'une plage annulaire 9, sur laquelle viendra buter et prendre appui un socle décrit en détail ci-après.

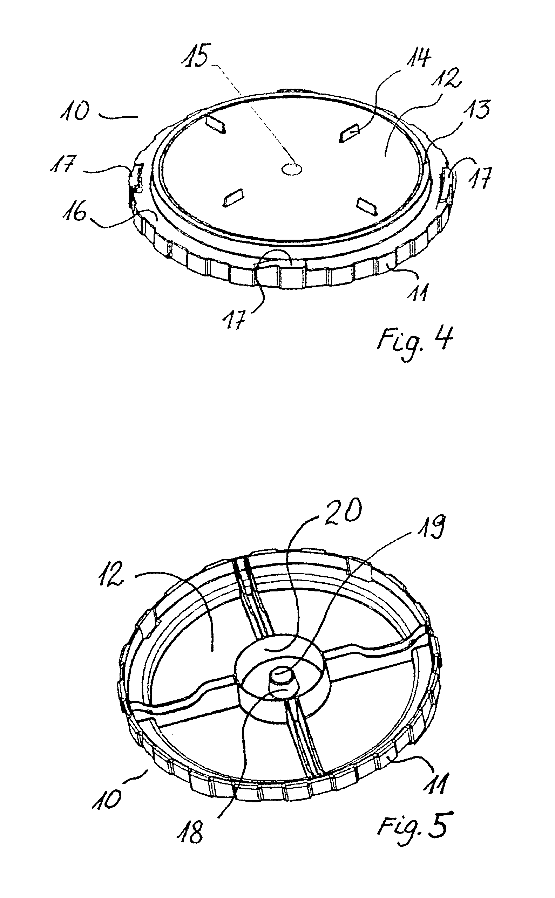

Sur la figure 4, est illustré le socle 10 en forme de galette ronde qui est destiné à coopérer avec la base 1 de l'appareil. On voit immédiatement que le socle a, sur son contour extérieur le plus large, la forme d'un court tronc de cylindre portant des dents formant un crantage 11, qui est complémentaire du crantage 5 de la base 1, et est destiné à coopérer avec lui.

La surface supérieure du socle 10 se présente sous forme d'un disque plat 12, bordé d'une couronne circulaire 13 et muni de courtes lames de maintien 14 directement reprise de l'état de la technique et destinée à empêcher que le fromage puisse se mettre en rotation sous l'action du couteau 2. Le diamètre intérieur de la couronne circulaire 13 est choisi pour être légèrement supérieur au diamètre usuel et/ou prédéterminé du fromage.

Au centre du disque plat 12, se trouve l'orifice circulaire 15 d'un canal guide dont le diamètre est choisi pour coopérer avec une tige.

Enfin sur le pourtour du socle, à savoir sur la plage annulaire 16 qui sépare la paroi extérieure de la couronne circulaire 13 du crantage 11, sont aménagées des languettes 17 bordées sur leur côté extérieur uniquement, qui, en coopération avec un contre organe porté par une autre pièce décrite plus loin, formeront des couples d'éléments de fixation à baïonnette.

Sur la figure 5, on reconnaît le crantage extérieur 11 du socle 10. Un téton central creux 18, dont la paroi extérieure est légèrement conique, comporte un canal guide cylindrique 19, dont on a vu plus haut que l'orifice 15 débouche au centre de la surface du disque plat 12. Une couronne centrée 20, est également aménagée et l'espace annulaire qui la sépare du téton 18 sert de logement à une douille.

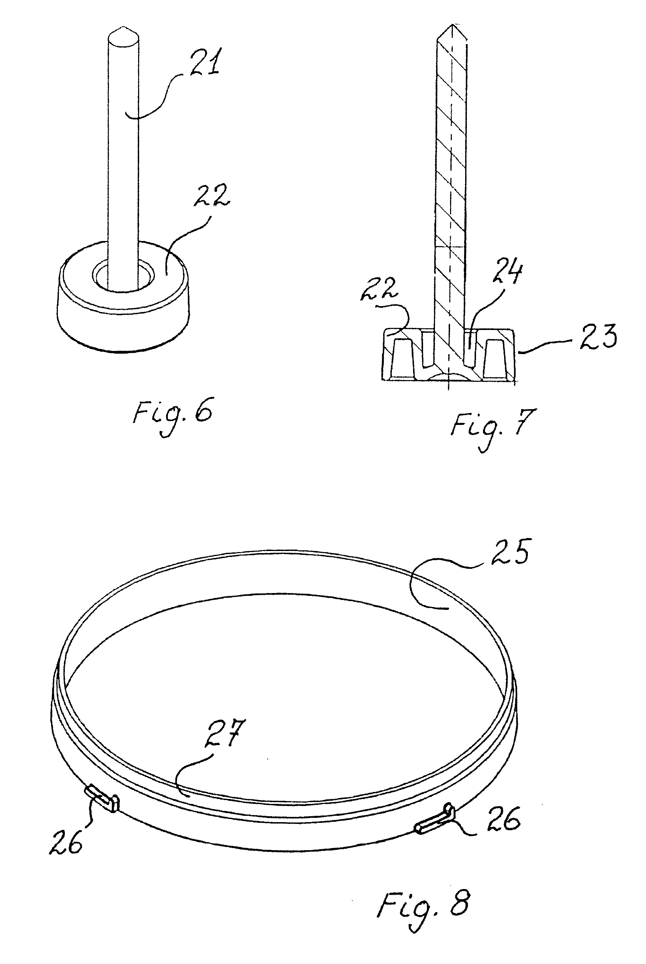

Sur la figure 6, on reconnaît la tige 21, terminée par une douille 22.

On retrouve ces deux éléments sur la figure 7, qui permet de constater que la paroi extérieure 23 de la douille 22 est très légèrement conique ce qui lui permet de coopérer en friction avec la paroi intérieure de la couronne centrée 20 que porte la face inférieure du socle 10. Le diamètre intérieur de la couronne 20 et le diamètre extérieur de la douille 22 sont choisis pour être en rapport. Sur une partie de sa hauteur, la douille 22 comporte un évidemment circulaire 24 destiné à coopérer en friction avec le téton 18. Ici aussi les diamètres sont choisis en rapport.

Sur la figure 8 est représentée une bague rigide 25, munie de tronçons de corniches 26, dont la forme, la taille, le nombre et la disposition sont choisis pour coopérer avec les languettes bordées 17 du socle 10 de manière à former ensemble des couples d'éléments de fixation à baïonnette. On observe, dans la moitié supérieure de la bague rigide 25 un épaulement circulaire 27 réalisé par diminution d'épaisseur de la bague. Cet épaulement permettra de solidariser sur la bague rigide 25, par collage, par soudure, par application de produits composites, ou d'une autre manière, une coiffe souple ou rigide.

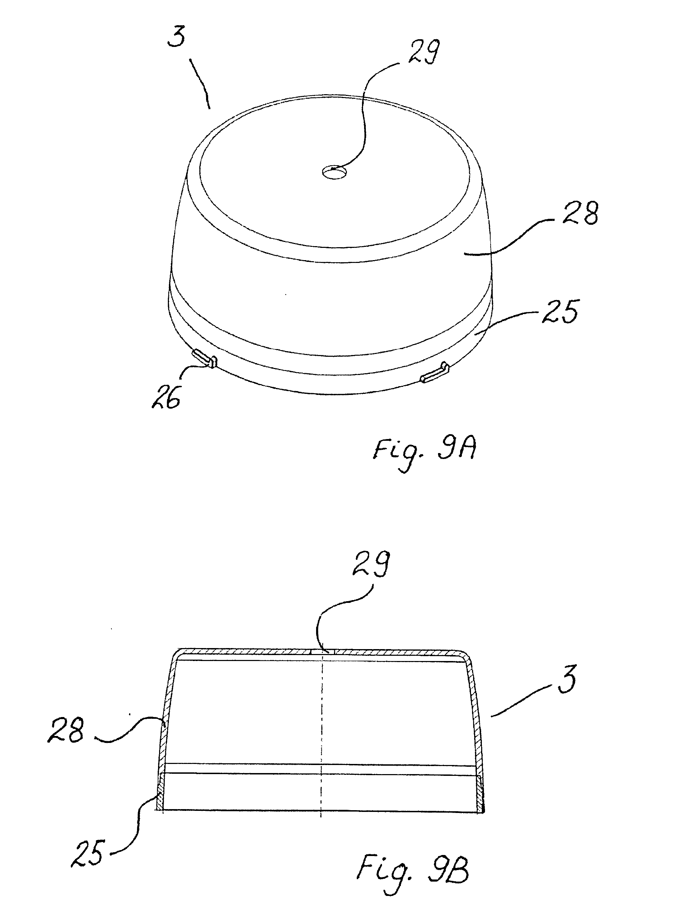

Sur les figures 9A et 9B, on reconnaît la bague rigide 25 et ses tronçons de corniches 26. Une coiffe 28, souple ou rigide, solidaire comme on l'a dit de la bague 25, se présente sous une forme rappelant celle d'un fez et comporte en son centre un trou circulaire 29 dont le diamètre est choisi en rapport avec celui de la tige 21. Dans la suite de cette description on désignera par le terme de couvercle 3 le tout solidaire formé par la bague rigide 25 et la coiffe 28.

Toutes les pièces ou éléments peuvent être réalisés, notamment par injection ou moulage, en matière synthétique essentiellement rigide de qualité dite alimentaire. Selon une variante, la coiffe 28 peut être réalisée en matière souple, par exemple en silicone, également de qualité dite alimentaire.

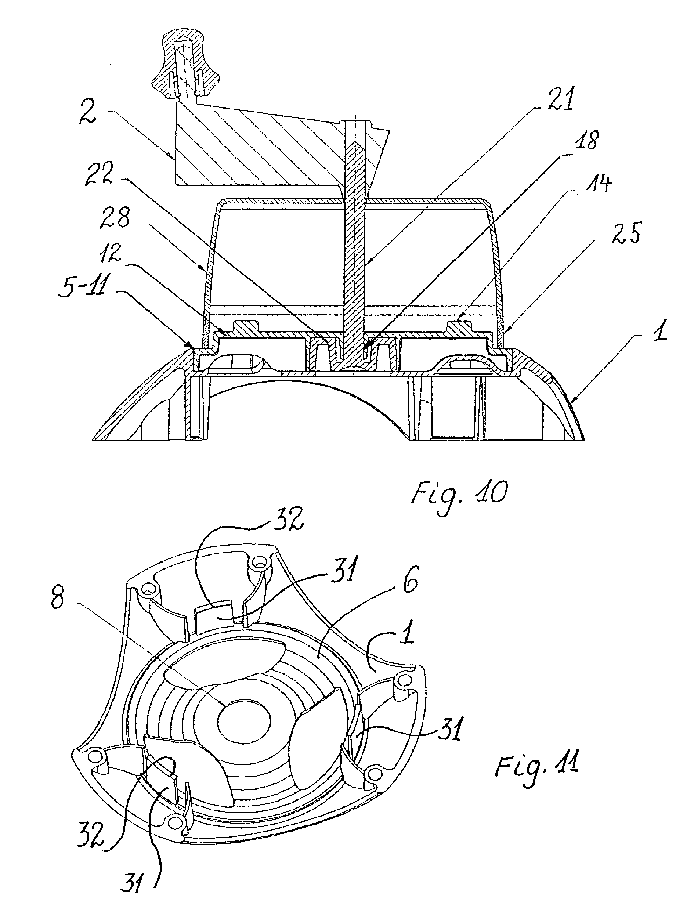

La figure 10 a une chose en commun avec la figure 1, à savoir que le couteau 2 est montré dans une position absurde, c'est-à-dire engagé sur la tige 21 alors que le couvercle 3 est en place. Il n'est évidemment pas question de racler le couvercle, mais cette position absurde du couteau est utile pour illustrer la collaboration entre celles des diverses pièces ou parties de l'appareil dont chacune a été commentée en relation avec les figures précédentes.

Sur la figure 11, on peut remarquer que le dessous de la base 1 de l'appareil comporte trois languettes de retenue 31 terminées par un rebord en griffe 32. Ces languettes sont légèrement flexibles et leurs dimensions, leur épaisseur, leur orientation et leur emplacement sont choisis pour coopérer en élasticité avec le socle 10 de façon à permettre sa fixation amovible par effet ressort dans la base.

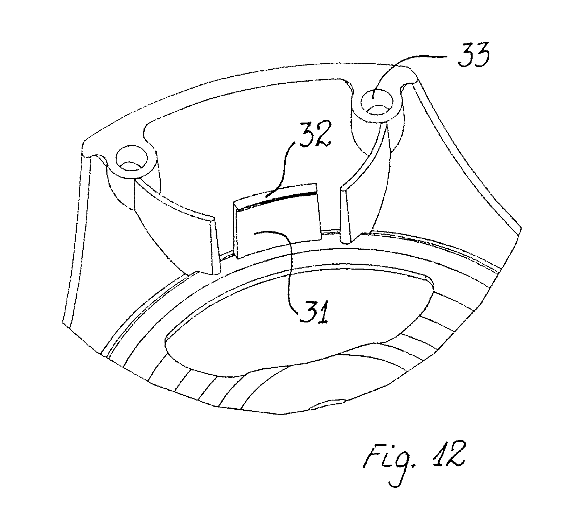

Sur la figure 12, on voit une languette de retenue 31, terminée par son rebord en griffe 32. On distingue également des logements 33 dans lesquels pourront être enfoncés les tenons d'une plaque semelle munie de pastilles en caoutchouc anti-dérapant destinées à assurer une parfaite stabilité lors de l'utilisation de l'appareil. Chacun des trois pieds de l'appareil en est muni.

Tous les aspects constructifs de l'appareil ayant été décrits, on peut passer en revue ses aspects fonctionnels et ses avantages.

Lorsque le fromage est acheté entier, on peut soit éliminer la croûte en la tranchant avec un couteau de cuisine, soit diviser le fromage en deux morceaux cylindriques, en général de hauteurs égales. Le fromage peut aussi être acheté directement débité en moitié, auquel cas aucune opération préparatoire n'est nécessaire.

L'utilisateur place le fromage, face découverte vers le haut, puis le place sur le socle 10, en utilisant, le cas échéant la couronne circulaire 13 comme repère tactile pour un bon centrage. L'utilisateur appuie ensuite fermement pour faire pénétrer les lames de maintien 14 dans la croûte inférieure du fromage, ou dans la pâte si l'on a retiré aussi la croûte inférieure, cela de manière à éviter que le fromage puisse tourner sur le socle 10. Dans le cas d'un appareil muni d'un couvercle à coiffe souple, avant de placer le fromage sur le socle, l'utilisateur peut le revouvrir avec le couvercle 3, puis, au travers de la coiffe souple 28, il peut saisir le fromage de sa main, mais sans le toucher des doigts., et le placer sur le socle 10.

L'utilisateur saisit ensuite la bague rigide 25 du couvercle 3 et la solidarise par un court mouvement de rotation avec le socle 10 au moyen des éléments de fermeture à baïonnette 26 et 17.

L'utilisateur peut alors saisir la tige 21 et l'engager dans le canal guide cylindrique 19, puis sans se préoccuper en rien du centrage, enfoncer la tige 21 au travers du fromage en appuyant sur la douille 22 jusqu'à ce que celle-ci arrive en butée contre la face inférieure du disque plat 12 du socle 10. Ce faisant, la tige passe par le trou circulaire du couvercle 3, puis le téton conique 18 se solidarise par friction avec la douille 22.

Le socle 10 portant le fromage entièrement empalé sur la tige 21 peut alors être placé dans la base 1 en cherchant par tâtonnement une position d'engagement par correspondance complémentaire du crantage 11 du socle avec celui 5 de la base. Le socle 10 descend alors dans la base jusqu'à s'appuyer sur la plage annulaire 9 et ne peut plus bouger en rotation par rapport à la base.

L'utilisateur retire alors le couvercle 3 en désengageant les couples 17 et 26 de fermetures à baïonnette, puis engage le couteau 2 sur la tige 21.

L'appareil est alors prêt à être utilisé pour former les rosettes.

Après une phase de consommation que l'on suppose partielle, l'utilisateur peut en quelques manipulations ranger le fromage sur son socle 10 et protégé par son couvercle 3 dans une armoire frigorifique. Pour cela, il lui suffit de retirer le couteau 2, puis de replacer le couvercle 3 sur le socle au moyen des fermeture à baïonnette 17 et 26, et de placer le tout dans l'armoire frigorifique.

Le fromage est alors enveloppé comme dans une boîte ayant la même forme que lui, ce qui réduit spectaculairement l'encombrement. L'encombrement en hauteur peut aussi être facilement réduit car il suffit à l'utilisateur de retirer la tige 21 en appuyant sur la tige pour la dégager puis en tirant sur la douille 22.

Ultérieurement, pour une nouvelle phase de consommation, quelques simples opérations inverses permettent de faire opérer à nouveau l'appareil.

Enfin, lorsque le fromage a été entièrement consommé et les diverses parties de l'appareil lavées, le rangement économe en place de l'appareil peut avoir lieu. Pour ce faire, l'utilisateur place la base 1 de l'appareil la tête en bas. Dans le cas d'un appareil avec couvercle à coiffe rigide, l'utilisateur dispose ensuite le coteau 2 et la tige 21 à l'intérieur du couvercle, par exemple au moyen d'un rétenseur en soi connu. Le socle 10 et le couvercle 3 étant solidarisés au moyen des fermetures à baïonnette 17 et 26, l'utilisateur présente l'ensemble formé du socle 10 et du couvercle 3 la tête en bas en appuyant sur le couvercle 3 jusqu'à ce que le socle coopère en élasticité avec les languettes de retenue 31 dont les rebords en griffe 32 retiennent le socle dans cette position. Dans le cas de la variante utlisant un couvercle à coiffe souple, après avoir placé la base de l'appareil la tête en bas, il peut disposer le couteau 2 et la tige 21 sur le renfort à trois bras, après quoi il peut présenter l'ensemble formé du socle10 et du couvercle la tête en bas et mettre à profit le caractère déformable de la coiffe souple 28 en appuyant sur le socle 10 jusqu'à ce que celui-ci coopère en élasticité avec les languettes de retenue 31. Le couteau 2 et la tige 21 se trouvent alors maintenus à l'intérieur de la base, pris en sandwich entre le support à trois bras 6 et la coiffe souple 28 qui agit comme un soufflet ressort, le volume de l'ensemble étant alors encore plus réduit.

L'encombrement de l'appareil en configuration de rangement est réduit et les accessoires que constituent le couteau 2 et la tige 21 y sont sûrement enfermés.

Revenant au but de l'invention tel qu'on l'a exposé plus haut, on constate en quoi ses quatre directions sont pleinement réalisées. En effet l'encombrement lié à l'entreposage provisoire du fromage entamé est triomphalement réduit grâce à l'adoption d'un socle amovible par rapport à la base. Cet encombrement est encore d'autant plus réduit lorsque le couvercle est muni d'une coiffe souple, celle-ci épousant au plus près la forme du fromage, sans volume inutile notable entre eux. L'encombrement lié à l'entreposage prolongé de l'appareil après un cycle complet d'utilisation est également spectaculairement réduit, car grâce à la la fixation sur la base retournée du socle muni du couvercle, tous les accessoires s'y trouvant rangés et aucun emballage ou carton de rangement n'étant plus nécessaire, cela tout en prévenant que les accessoires soient perdus ou égarés. Grâce à la configuration du socle et à la coopération du socle et de la tige, le centrage et l'engagement du fromage sur la tige ne sont plus une préoccupation. Finalement, le gain d'hygiène et de confort de manipulation pour le consommateur est aussi très manifeste, notamment dans le cas d'un appareil muni d'un couvercle à coiffe souple, puisque le fromage est mieux protégé que jamais et que l'utilisation de l'appareil n'implique plus du tout que l'utilisateur touche ou manipule le fromage avec ses mains ou ses doigts.

Mais la présente invention permet d'aller plus loin encore. En effet, elle affecte aussi le conditionnement de vente du fromage en permettant d'offrir au consommateur un fromage conditionné en pots de forme et dimension idoines, à l'image des pots de yoghourt ou autre produits laitiers en matière synthétique avec un opercule scellé, le pot se présentant exactement comme le couvercle illustré à la figure 9A (mais sans trou 29 évidemment) et portant directement les éléments de fermeture à baïonnette 26 de manière que le conditionnement de vente du fromage puisse être adapté directement sur le socle 10 et donc éliminer tout contact entre la main ou les doigts du consommateur et le fromage.

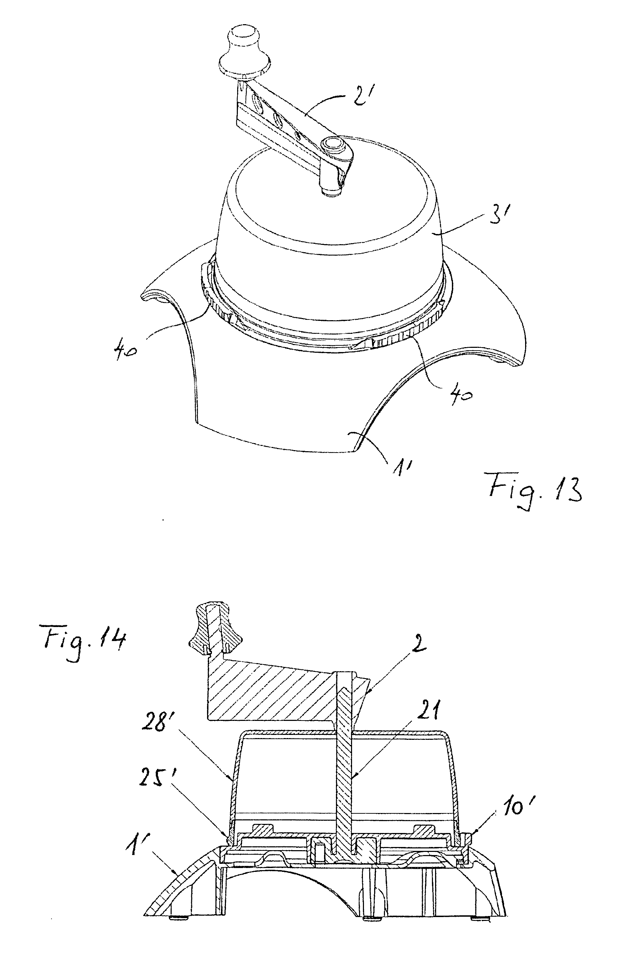

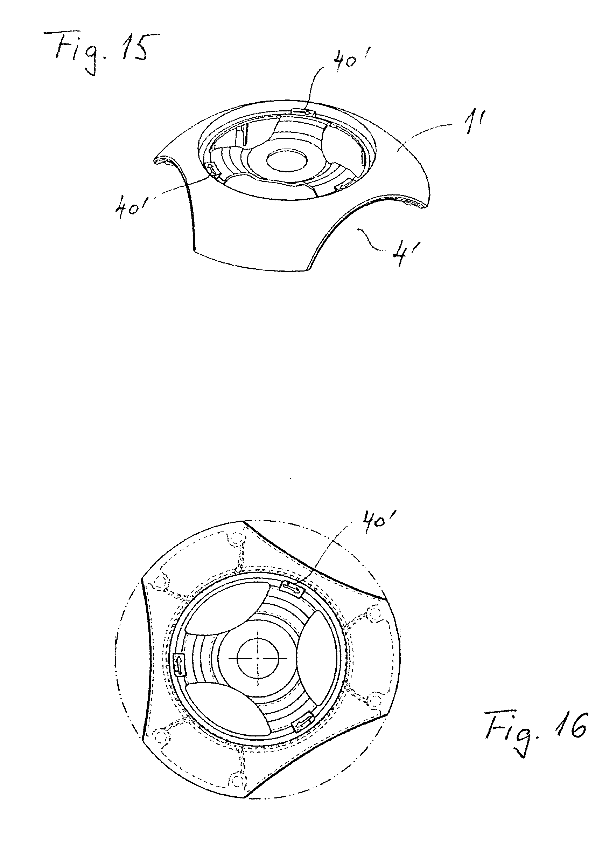

Un seconde mode d'exécution de l'appareil selon l'invention est représenté sur les figures 13 à 21.

On reconnaît sur la figure 1 une base 1', un couteau tournant 2' et un couvercle 3'.

Ce mode d'exécution diffère essentiellement en deux points du mode d'exécution décrit aux figures 1 à 12. Le premier point concerne la fixation du socle 10' sur la base 1'. Le second point concerne le positionnement du couvercle 3' sur le socle 10'. Pour le reste, l'appareil est conforme au premier mode d'exécution décrit.

Comme représenté aux figures 13 à 19, la fixation du socle 10' sur la base 1' s'effectue, dans ce mode d'exécution, au moyen de trois dispositifs de fixation à baïonnette 40, 40'. De tels dispositifs de fixation à baïonnette sont en soi connus de l'homme du métier et il n'est pas nécessaire de les décrire ici plus en détail. II permet de rendre la base solidaire du socle et d'éviter que le socle ne se déboîte de la base lorsque l'on utilise l'appareil. De plus, gràce à cette configuration, la douille 22 de la tige 21 est solidement emprisonnée entre le socle et la base.

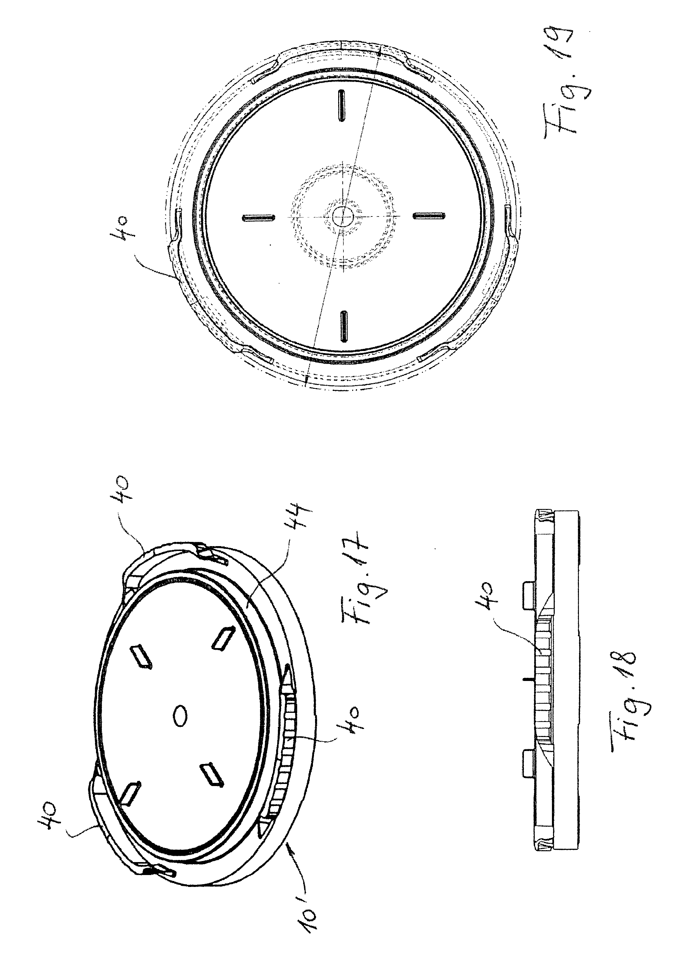

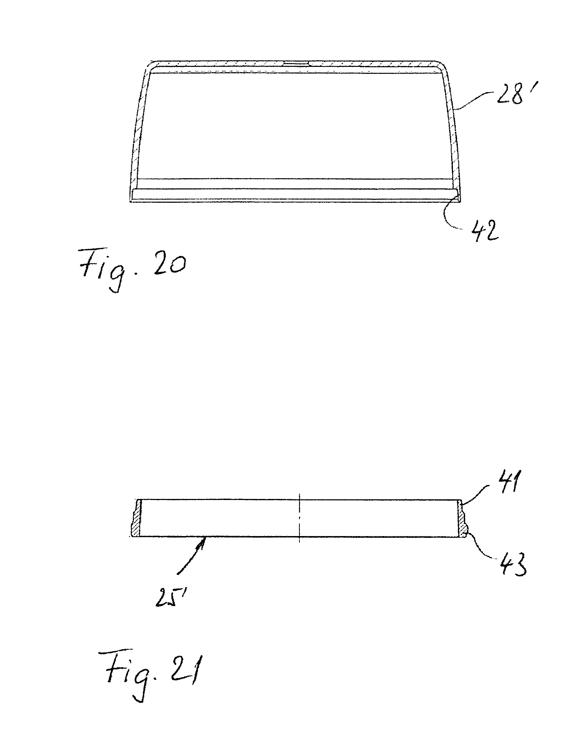

Dans ce second mode d'exécution de l'appareil de l'invention, le couvercle 3' est muni à sa base d'une bague rigide agencée de façon à pouvoir être clipsée sur le socle 10'. A cet effet, comme représenté à la figure 20, la bague rigide comporte à sa à sa base une partie annulaire 43 de forme convexe agencée de façon à coopérer avec une partie annulaire 44 (voire figure 17) du socle 10', de façon à permettre la fixation du couvercle sur ledit socle par clipsage. La bague 25' comporte à sa partie suprieure partie annulaire 41 de diamètre extérieur réduit de façon à coopérer avec la partie inférieure 42 du couvercle, par collage, soudure ou par tout autre moyen adéquat.

Le couvercle peut, comme on l'a décrit dans la première forme d'exécution, être réalisé sous la forme d'une coiffe souple en silicone ou sous la forme d'une cloche en matière plastique rigide aux dimensions du fromage, de façon à permettre une grande facilité de personalisation.

## Revendications

1. Appareil manuel à racler le fromage comportant un plateau, une tige et un couteau tournant muni d'une poignée, le plateau comprenant deux éléments distincts coopérant l'un avec l'autre, à savoir une base (1; 1') et un socle rond (10; 10'), **caractérisé en ce que** le socle (10, 10') est conformé pour coopérer avec un couvercle (3, 3') et **en ce que** le socle (10; 10') et le couvercle (3; 3') sont configurés de manière à envelopper le fromage comme dans une boîte ayant la même forme que lui.

2. Appareil selon la revendication 1, **caractérisé en ce que** le socle comporte en son centre un canal guide cylindrique (19) inscrit dans un téton (18) et **en ce que** le diamètre du canal guide cylindrique est choisi pour être en rapport avec le diamètre de la tige (21).

3. Appareil selon la revendication 2, **caractérisé en ce que** la tige (21) est terminée par une douille (22) conformée pour coopérer avec une couronne centrée (20) disposée sur la face inférieure du socle (10; 10').

4. Appareil selon la revendication 1, **caractérisé en ce que** le couvercle (3, 3') comprend une bague rigide (25, 25') sur laquelle est fixée une coiffe (28, 28') et **en ce que** la bague (25; 25') comporte des moyens (26; 43) destinés à coopérer avec des moyens correspondant (17; 44) du socle (10,;10') de manière à permettre la fixation amovible du couvercle (3; 3') sur le socle (10; 10').

5. Appareil selon la revendication 4, **caractérisé en ce que** les dits moyens de fixation amovibles sont des fermetures à baïonnette (26; 17).

6. Appareil selon la revendication 4, **caractérisé en ce que** les dits moyens de fixation amovibles sont des moyens de clipsage d'une partie annulaire (43) de la bague (25') avec une partie annulaire (44) du socle (10)'.

7. Appareil selon l'une des revendication 1 à 6, **caractérisé en ce que** le socle (10) et la base (1) coopèrent entre eux par le jeu d'un double crantage complémentaire (5 et 11).

8. Appareil selon l'une des revendication 1 à 6, **caractérisé en ce que** la fixation du socle (10') sur la base (1') s'effectue au moyen d'un dispositif de fixation à baïonnettes 40, 40'.

9. Appareil selon l'une des revendications 1 à 8, **caractérisé en ce que** la coiffe (28; 28') est une coiffe rigide.

10. Appareil selon l'une des revendications 1 à 8, **caractérisé en ce que** la coiffe (28; 28') est une coiffe souple réalisée en silicone.

11. Appareil selon la revendication 1, **caractérisé en ce que** la base (10; 10') comporte sur sa partie interne des languettes de retenue (31) munies d'un rebord en griffe (32) orienté vers le centre de la base (1; 1 '), l'ensemble des dites languettes étant conformé de manière à pouvoir retenir par effet ressort le socle (10; 10') portant le couvercle (3; 3') à l'intérieur de la base lorsqu'il y est introduit en compression de la coiffe (28; 28').

## Claims

1. A manual apparatus for scraping cheese comprising a tray, a post and a rotary blade equipped with a handle, the tray comprising two separate elements which cooperate with one another, namely a base (1; 1') and a round support (10; 10'), **characterised in that** the support (10; 10') is shaped to cooperate with a cover (3; 3') and **in that** the support (10; 10') and the cover (3; 3') are configured so as to enclose the cheese in the manner of a box having the same shape as the cheese.

2. The apparatus according to claim 1, **characterised in that** the support comprises in its centre thereof a cylindrical guide channel (19) provided in a nipple (18) and **in that** the diameter of the cylindrical guide channel is selected so as to be in relation with the diameter of the post (21).

3. The apparatus according to claim 2, **characterised in that** the post (21) ends with a bush (22) shaped to cooperate with a centred crown (20) provided on the lower face of the support (10; 10').

4. The apparatus according to claim 1, **characterised in that** the cover (3; 3') comprises a rigid ring (25; 25') to which is attached a cap (28; 28') and **in that** the ring (25; 25') comprises means (26; 43) intended to cooperate with corresponding means (17; 44) of the support (10; 10') so as to allow the cover (3; 3') to be removably attached to the support (10; 10').

5. The apparatus according to claim 4, **characterised in that** said removable attachment means are bayonet fastenings (26; 17).

6. The apparatus according to claim 4, **characterised in that** said removable attachment means are means for clipping an annular part (43) of the ring (25') to an annular part (44) of the support (10').

7. The apparatus according to any one of claims 1 to 6, **characterised in that** the support (10) and the base (1) cooperate with one another by means of a complementary pair of notchings (5 and 11).

8. The apparatus according to any one of claims 1 to 6, **characterised in that** the support (10') is attached to the base (1') by means of a bayonet attachment device (40; 40').

9. The apparatus according to any one of claims 1 to 8, **characterised in that** the cap (28; 28') is a rigid cap.

10. The apparatus according to any one of claims 1 to 8, **characterised in that** the cap (28; 28') is a flexible cap made of silicone.

11. The apparatus according to claim 1, **characterised in that** the base (10; 10') comprises in its interior retaining tabs (31) equipped with a hooked edge (32) oriented towards the centre of the base (1; 1'), the set of said tabs being shaped so as to be capable of resiliently retaining the support (10; 10') bearing the cover (3; 3') inside the base when the support is introduced therein while the cap (28; 28') is compressed.

## Patentansprüche

1. Handgerät zum Schaben von Käse mit einer Platte, einem Stab und einem drehenden, mit einem Griff versehenen Messer, wobei die Platte zwei verschiedene, miteinander kooperierende Elemente umfasst, und zwar eine Grundplatte (1; 1') und einen runden Sockel (10; 10'), **dadurch gekennzeichnet, dass** der Sockel (10, 10') so ausgebildet ist, dass er mit einem Deckel (3; 3') kooperiert, und dass der Sockel (10; 10') und der Deckel (3; 3') so gestaltet sind, dass sie den Käse wie in einer Schachtel, die die gleiche Form wie er hat, umhüllen.

2. Gerät nach Anspruch 1, **dadurch gekennzeichnet, dass** der Sockel in seiner Mittel einen zylindrischen Führungskanal (19) umfasst, der in einen Ansatz (18) einbeschrieben ist, und dass der Durchmesser des zylindrischen Führungskanals im Verhältnis zum Durchmesser des Stabs (21) gewählt wird.

3. Gerät nach Anspruch 2, **dadurch gekennzeichnet, dass** der Stab (21) in einer Hülse (22) endet, die so ausgebildet ist, dass sie mit einem mittigen, an der Unterseite des Sockels (10; 10') angeordneten (20) Kranz kooperiert.

4. Gerät nach Anspruch 1, **dadurch gekennzeichnet, dass** der Deckel (3, 3') einen steifen Ring (25, 25') umfasst, an dem eine Haube (28, 28') befestigt ist, und dass der Ring (25; 25') Mittel (26; 43) umfasst, die dazu bestimmt sind, mit entsprechenden Mitteln (17; 44) des Sockels (10; 10') zu kooperieren, so dass die lösbare Befestigung des Deckels (3; 3') am Sockel (10; 10') ermöglicht wird.

5. Gerät nach Anspruch 4, **dadurch gekennzeichnet, dass** die Mittel zur lösbaren Befestigung Bajonettverschlüsse (26; 17) sind.

6. Gerät nach Anspruch 4, **dadurch gekennzeichnet, dass** die Mittel zur lösbaren Befestigung Mittel zum Anklipsen eines ringförmigen Teils (43) des Rings (25') an ein ringförmiges Teil (44) des Sockels (10)' sind.

7. Gerät nach einem der Ansprüche 1 bis 6, **dadurch gekennzeichnet, dass** der Sockel (10) und die Grundplatte (1) untereinander über eine ergänzende doppelte Rastung (5 und 11) kooperieren.

8. Gerät nach einem der Ansprüche 1 bis 6, **dadurch gekennzeichnet, dass** die Befestigung des Sockels (10') an der Grundplatte (1') mittels einer Bajonett-Befestigungsvorrichtung (40, 40') erfolgt.

9. Gerät nach einem der Ansprüche 1 bis 8, **dadurch gekennzeichnet, dass** die Haube (28, 28') eine steife Haube ist.

10. Gerät nach einem der Ansprüche 1 bis 8, **dadurch gekennzeichnet, dass** die Haube (28, 28') eine flexible, aus Silikon hergestellte Haube ist.

11. Gerät nach Anspruch 1, **dadurch gekennzeichnet, dass** die Grundplatte (10; 10') auf ihrer Innenseite Haltezungen (31) mit einer zur Mitte der Grundplatte (1; 1') gewandten klauenförmigen Kante (32) umfasst, wobei alle Haltezungen so ausgebildet sind, dass sie durch Federwirkung den Sockel (10; 10'), der den Deckel (3; 3') trägt, in der Grundplatte halten können, wenn er durch Zusammendrücken der Haube (28; 28') in diesen eingesetzt wird.
